Europäisches Patentamt

European Patent Office

Office européen des brevets

(11) Publication number: **0 471 313 A2**

# EUROPEAN PATENT APPLICATION

(21) Application number: **91113433.6**

(22) Date of filing: **09.08.91**

(51) Int. Cl.5: **C01B 25/42**, C09K 21/04,
B27K 3/20, B27K 3/52,
D06M 15/673, D06M 11/72,
D21H 21/34

(30) Priority: **14.08.90 GB 9017823**

(43) Date of publication of application:
**19.02.92 Bulletin 92/08**

(84) Designated Contracting States:
**AT BE CH DE DK ES FR GB GR IT LI LU NL SE**

(71) Applicant: **ALBRIGHT & WILSON LIMITED**
**P.O. Box 3, 210-222 Hagley Road West**
**Oldbury, Warley, West Midlands B68**
**0NN(GB)**

(72) Inventor: **Smith, Kevin Michael**
**3 Bylands Close, Friarscroft**
**Bromsgrove, Worcestershire(GB)**
Inventor: **Smith, Raymond Anthony**
**28 Woodside Close**
**Walsall, West Midlands(GB)**

(74) Representative: **Kinton, Colin David et al**
**ALBRIGHT & WILSON LIMITED Patent**
**Department P.O. Box 2098, Seven Stars Road**
**Oldbury**
**Warley, West Midlands B69 4PR(GB)**

(54) **Complex phosphates.**

(57) A composition consisting essentially of ammonium pyrophosphate and having at least 70% of its phosphorus content present in the form of pyrophosphate is useful as a flame retardant for various materials.

EP 0 471 313 A2

Rank Xerox (UK) Business Services

This invention relates to complex phosphates, in particular ammonium pyrophosphate, to a process for its production and to a method of flame retarding substrates using a solution thereof.

Ammonium polyphosphate solutions are used to impregnate substrate such as fabrics and timber for flame retarding purposes. These products are made by reacting ammonia and polyphosphoric acid containing, for example 80-86% $P_2O_5$, especially 80.2% or 82.0% $P_2O_5$ (See GB-A-1504507). Another product includes ammonium polyphosphate made from polyphosphoric acid with a degree of condensation of 3-30 and an atomic ratio of phosphorus to nitrogen of 1:0.5-2 (See GB-A-1069946). Such polyphosphoric acids contain ortho-, pyro-, tripoly, tetrapoly and higher polyphosphoric acids, in proportions governed solely by the overall $P_2O_5$ content of the acid (see Canadian Journal of Chemistry 1956, 34, page 790.). In the acids of GB-A-1504507, the amounts of ortho-, pyro-, tri- and higher polyacids are about 15, 40, 25 and 20% respectively, while the corresponding amounts in the acids in GB-A-1069946 are in the ranges 0-15, 1-40, 2-25 and 20-97% respectively. It has been discovered that the ammonium polyphosphates of GB-A-1504507 are not wholly satisfactory when they are used to flame retard resin bonded wood-based panel products.

We have discovered ammonium pyrophosphate containing considerably reduced levels of other phosphates, how to make it in a simple process, and its utility as a flame retardant.

Accordingly, the present invention provides in one aspect ammonium pyrophosphate, wherein at least 70% of the $P_2O_5$ content is present as pyrophosphate.

In a second aspect, the present invention also provides a process for making ammonium pyrophosphate, wherein Phase II solid pyrophosphoric acid is dissolved in an aqueous solution of ammonium pyrophosphate at a pH of 6 to 10, to produce an aqueous liquor of pH 5 to 9, which is then reacted with ammonia to give a solution of pH 6 to 10 of ammonium pyrophosphate wherein at least 70% of the $P_2O_5$ content is present as pyrophosphate.

In a third aspect, the invention further provides a method of flame-retarding a flammable substrate which comprises impregnating said substrate with an aqueous solution comprising ammonium pyrophophate, wherein at least 70% of the $P_2O_5$ content is present as pyrophosphate. Preferably, impregnation is followed by drying and heat-curing the impregnated substrate.

The present invention yet further provides a flame-retarded material comprising a flammable substrate and ammonium pyrophosphate, wherein at least 70% of the $P_2O_5$ content is present as pyrophosphate.

Preferably the ammonium polyphosphate contains at least 80% $P_2O_5$ as pyrophosphate, less than 15% as tripoly and higher polyphosphates and less than 8% as orthophosphate, especially at least 90% as pyrophosphate, less than 5%, preferably less than 3%, as orthophosphate and the remainder, (preferably less than 5%) as tri- and higher polyphosphates.

Phase II solid pyrophosphoric acid is described in Kirk-Othmer Encyclopaedia of Chemical Technology, 2nd Edition, Vol. 15, page 241. It is obtained by crystallisation of liquid phosphoric acid, preferably containing 79.7% $P_2O_5$ (which has a composition corresponding to $H_4P_2O_7$), in the presence of phase II seed crystals. (The 79.7% liquid pyroacid contains about 46% pyro phosphoric acid, 20% orthophosphoric acid, 20% tripolyphosphoric and 14% higher polyphosphoric acids). The crystallisation is preferably a solidification of the whole of the acid present, - this being an option when the liquid is at the preferred 79.7% $P_2O_5$ content - but may otherwise be a recrystallisation with separation of crystals of pyroacid from mother liquor containing also ortho and tri- and higher poly acids. The crystallisation is usually performed at 40-65°C, preferably 50-65°C, and typically at 60°C.

In the crystallisation process, the condensed pyroacid is preferably contacted with a cooled surface on which the pyroacid solidifies as a thick layer; alternatively but less preferredly the pyroacid crystals may be formed in a stirred body of cooled acid. Advantageously the crystallisation is in a rotating drum crystalliser, with the solid product building up on the cooled interior wall of the rotating drum.

The solid phase II crystals, after separation from mother liquor if any, are contacted with the aqueous ammonium pyrophosphate solution, which is preferably a recycled portion of the product. The solution is initially at pH 6-10, especially at 8-10, and the relative proportions of crystals to solution are such that the final pH, when the liquor no longer contacts crystals, is 5-9 especially 6-8. The contact may be batchwise with all the crystals contacting all the solution, or semi-continuous with the solution passed repeatedly over the crystals but is preferably continuous with passage of the solution over the crystals to leach out the pyroacid progressively. The contact is at less than 65°C e.g. 20-40°C.

The liquor at pH 5-9 is then mixed with ammonia to produce a solution at pH 6-10 of ammonium pyrophosphate. A portion of the solution is usually recycled to contact fresh crystals, preferably after cooling, and the remainder is removed as product.

The ammonium pyrophosphate solutions usually contain nitrogen atoms in ammonium ions and phosphorus atoms in phosphate in a ratio of 1-2:1. A particularly preferred ratio is 1.4 to 1.6:1.

In a preferred embodiment of the invention, the aqueous solutions can also contain carbamic acid derivatives having at least two amino groups per molecule. Such additives can improve the leach-resistance of the flame-retardant finish. Particularly useful as additives are urea, guanidine and dicyandiamide. The use of urea is preferred. The proportion of the carbamic acid derivative to the pyrophosphate will preferably be in the ratio of from 3:1 to 1:1 on a weight basis, most preferred proportions being in the range 1.5:1 to 2:1.

Substrates may be treated by the processes of the invention include timber including wood panel products and wood sheet materials such as plywood, chipboard, medium density fibre board and other particle boards, such as straw board. These particle boards comprise wood chips bonded together with resin. Especially important are particle boards with 2 or more layers of wood chips of different density, in particular those of sandwich construction, with an intermediate layer of low density sandwiched between 2 layers of higher density.

The impregnation of the substrate by the treatment solution may be achieved by any of the conventional means available for the particular type of substrate. Thus wood and wood products e.g. the particle board substrates may be impregnated using soaking, dipping or spraying techniques, by having the aqueous solution brushed onto their surface or by pressure impregnation process or vacuum impregnation processes.

The proportion of ammonium pyrophosphate mixture which is introduced into the substrate will depend upon the desired degree of flame-retardancy and the flammability of the substrate.

With wood and fibres boards it is desirable to introduce 1 to 30%, preferably 5 to 25%, by weight of the ammonium pyrophosphate, (the above percentages are expressed on a basis of the weight of the dry ammonium pyrophosphate to the weight of the dry substrate concerned).

The concentration of the aqueous solutions of ammonium pyrophosphate used in the impregnation step will depend upon the method of impregnation adopted and upon the amount of pyrophosphate which is desired to be added on the substrate. As a general guide the concentration used may be in the range 0.5 to 20%, e.g. 10 to 15%, by weight of the ammonium pyrophosphate (expressed as the percentage weight of phosphorus pentoxide on the weight of water present). The aqueous solutions may contain additives such as are conventionally used in the art of flame proofing or retarding wood products.

Such additives include for example known wood preservatives e.g. disodium octaborate tetrahydrate and paraffin waxes used to improve dimensional stability of a product board.

After the impregnation step the substrates may be dried and then heat cured. Impregnated timber products can be dried by heating progressively, e.g. from 30 to 80 °C, for a period of e.g. 12 to 120 hours whilst slowly reducing the surrounding humidity to give a treated product with a moisture content appropriate to its intended end use. Optionally, heat curing may be carried out at a higher temperature (e.g. 80-110 °C) for a further period (e.g. 4-8 hours).

Alternatively the ammonium pyrophosphate solution may be mixed with the particle board forming components prior to, or during, the process of board manufacture. The solutions may in this case have a concentration of 10-50%, preferably 20-40%, more preferably 25-35% (as $P_2O_5$) and may comprise 5-15%, preferably 8-12%, of the total weight of board forming components.

The boards can be made by conventional pressing processes and may contain any conventional bonding resin utilisable in such processes such as urea, melamine, phenol or resorcinol condensates with aldehydes (e.g. formaldehyde) or isocyanates.

Other substrates which may be treated by the processes of the invention include woven and non-woven materials. These are typically cellulosic based substrates e.g. textile fabrics or filaments, such as of cotton, linen, jute, hesian or regenerated cellulosic materials, such as rayon or viscose, but can also be paper, cardboard or wallpaper. The substrate can also be based on cellulosic material and other fibres coblendable or mixed therewith, e.g. polyester or nylon, acrylics, acetate, polypropylene, silk or wool. These blends or mixtures of fibres may contain at least 50% of the cellulosic material, e.g. 70-100%, such as 50-80% thereof.

Fabric weights can be 50-1000 $g/m^2$, e.g. 80-500 $g/m^2$. The fabric may be of pile or plain construction. The fabric may be plain or undyed or may be dyed or printed, especially with white or pastel shades. The fabric before impregnation is usually free of dirt, sizes, natural waxes and applied finishes though it may contain an optical brightening agent.

The flame retardant medium usually at pH 5-8, e.g. 5.5-7.5, is applied to the substrate by conventional procedures e.g. padding, soaking or spraying, usually to a wet pick up of 50-150% e.g. 60-100%. The total solids add-on before drying and after squeezing off surplus liquid is usually 10-35%, e.g. 25-30% (based on the dry initial weight of the fabric). After impregnation the substrate is then dried, e.g. for textile substrates at 80-120 °C for 2 to 40 minutes, e.g. 2-10 minutes. The drying may be performed in any conventional drier, e.g. a forced air drier of stenter. The solids pick-up after drying is usually 8-25%, such as 10-20% (based on the original weight of the fabric).

The dried substrate is then cured, e.g. by heating at a temperature of 120-170°C, such as 130-170°C, e.g. 140-170°C or 147-170°C for 6 to 0.5 or 5-0.5 minutes. The combination of longer times and higher temperature is avoided to decrease any tendency to discoloration.

Preferred temperatures, especially with high proportions of carbamic acid derivative to pyrophosphate, are 147-165°C, such as 147-160°C or 147-155°C, for 6-0.5, e.g. 5-2 minutes. To minimise risk of any colour formation, especially with low proportions of carbamic acid derivative to pyrophosphate, the dried substrate is preferably cured by heating at 120-147°C for 6 to 0.5 minutes. The combination of longer times and higher temperatures is avoided to decrease any tendency to discoloration. These preferred temperatures are 120-142°C, such as 124-142°C or 128-138°C, for 6-0.5, e.g. 6-1.5 minutes, while at temperatures of 138-147°C, times of 3.5-0.5 minutes, such as 138-142°C or 142-147°C for 3.5-0.5 minutes, can be used. Curing at 130-140°C for 4-2, e.g. 3.5-2.5 minutes is preferred.

The curing at 147-170°C with a higher proportion of carbamic acid derivative to pyrophosphate usually has a higher cure efficiency than the lower temperature cure which has a higher proportion of pyrophosphate and higher amount thereof in the impregnation bath, but the latter has a reduced tendency to discoloration especially with white or pastel fabrics.

The curing, which is usually continuous, may be performed by radiant e.g. infra red heating or heating by injection of steam and/or hot air through or onto the substrate, or by contact of the substrate with heated metal drums in a vertical stack, but preferably the curing is by heating from impact of hot air on the surface of the substrate, preferably on both surfaces to ensure uniformity of heating. Thus preferably the substrate is passed continuously on a stenter through a thermostatically-controlled oven in which heated air flows across the top and bottom surfaces of the substrate. The stenter gives the most uniform curing with minimum scorching. In the case of the stenter oven, the cure temperature of the substrate is essentially the same as that of the heated air flow. Usually at the end of the curing the substrate is cooled rapidly by passing or drawing cool air through it.

The cured fabric as finished usually has a solids content of 6-25%, such as 8-20%, and usually contains 0.5-5%P, e.g. such as 0.5-4%P, preferably 1-3%P or 2-4%P. The fabric as finished has a reduced flammability compared to the untreated substrate and can pass the BS 5852 test with ignition sources 0 and 1.

The previously used ammonium polyphosphates are produced via neutralisation of polyphosphoric acid. The only effective methods of producing this in a suitable form involve addition of phosphorus pentoxide to water or more dilute purified phosphoric acid or the concentration of the dilute acid. Both of these processes are very expensive from both a time and cost point-of-view and cannot make direct use of the readily available and much cheaper wet-process (approx 70% $P_2O_5$ content) acid.

In contrast, the present invention, in that the method of manufacture proceeds via a crystallisation step which can also be used to purify the phosphate, can use lower grade and less concentrated materials much more effectively, thereby generating an immediate advantage.

The material is also advantageous with respect to conventional ammonium polyphosphates, in that it has a fixed composition which is not dependent upon the precise $P_2O_5$ content of the initially prepared acid. Quality control is therefore substantially enhanced and simplified.

As can be seen from the Examples, ammonium pyrophosphate is at least as effective on a weight/weight basis as ammonium polyphosphate and hence no extra phosphorus is added to the substrate when it is treated.

The invention is illustrated by the following Examples, wherein, unless otherwise specified, all parts and proportions are on a weight for weight basis.

## Example 1

250 parts of liquid phosphoric acid (79.6% $P_2O_5$) at 60°C was placed in a cylindrical vessel which could be rotated and water cooled. 2.5 parts of Phase II pyrophosphoric acid was added and rotation and cooling was commenced. After 14 hours complete crystallisation occured.

Ammonium pyrophosphate solution (approx 30% $P_2O_5$; pH7) was sprayed onto the solidified acid and the overflow collected in a separate vessel. The spray rate was controlled to maintain the overflow at about 30°C and at a pH greater than 5.5. The collected liquid was maintained at approx 30% $P_2O_5$ and pH 7 by addition of water and ammonia. A portion of the liquid was continuously recirculated to the spray. Spraying was continued until all the acid had dissolved.

The product had a pH of 7.1 (measured on a 2.5% solution), a $P_2O_5$ content of 29.5% and contained only 1.4% $P_2O_5$ as orthophosphate.

## Example 2

Oven dried (105˚C overnight) wood core chips (1350g) were placed in a drum mixer and were sprayed with a suspension of diphenylmethane-4,4'-diisocyanate (81g) in water (52g) and then with ammonium pyrophosphate solution (150g; 29.47% $P_2O_5$; N:P molar ratio = 1.486; $P_2O_5$ present as orthophosphate = 1.38%; pH 6.7; specific gravity = 1.32) to form the mattress composition (10% water content). This was compressed at 180˚C to form boards of size 400mm x 400mm x 12mm.

In comparison with boards made in an identical manner but using a mattress composition comprising a total of 135g water in place of the water and phosphate solution, these boards showed a greatly enhanced flame-retardancy (measured according to BS 476 part 7), substantially equivalent to that resulting from a comparison treatment using an equal amount of ammonium polyphosphate.

The treated boards had internal bond values of 770 ± 40 (polyphosphate) and 740 ± 40 (pyrophosphate) kPa and both had densities of 700 ± 20 $Kg/m^3$.

## Example 3

A mixture comprising
ammonium pyrophosphate solution (as used in Example 2)
59%
urea
27%
and water
14%
was made up and used to treat the following fabrics:-

A    Plain weave vat printed cotton weighing 240g/$m^2$

B    Plain weave vat printed viscose weighing 260g/$m^2$

C    60:40 cotton/polyester weave weighing 380g/$m^2$

After removal of excess liquid the wet pick up was 26-28%. Each fabric was then dried at 110˚C and cured by baking at 150˚C for 3 minutes.

The samples showed no difference in shade or handle compared with samples treated similarly with an equal amount of ammonium polyphosphate and all passed the BS 5852 test with ignition sources 0 and 1.

## Claims

1. A composition consisting essentially of ammonium pyrophosphate **characterised in that** at least 70% of the phosphorus present in said composition is present in the form of pyrophosphate.

2. A composition according to Claim 1, **characterised in that** at least 80% (e.g. at least 90%) of said phosphorus is present in the form of pyrophosphate, less than 15% (e.g less than 5%) of said phosphorus is present in the form of tripolyphosphate or higher polyphosphates and less than 8% (e.g. less than 5% and preferably less than 3%) of said phosphorus is present in the form of orthophosphate.

3. A process for making a composition according to Claim 1 or 2 **characterised in that** solid Phase II pyrophosphoric acid is dissolved in an aqueous solution of ammonium pyrophosphate and the resulting aqueous liquor reacted with ammonia to yield a solution of ammonium pyrophosphate having at least 70% of its phosphorus present as pyrophosphate.

4. A process according to Claim 3, **characterised in that** the pH of said aqueous solution of ammonium pyrophosphate is in the range 5 to 9.

5. A process according to Claim 3 or 4 **characterised in that** after reaction of said aqueous liquor with ammonia, the resulting ammonium pyrophosphate solution has a pH in the range 6 to 10.

6. A process according to Claim 3, 4 or 5 **characterised in that** the ammonium pyrophosphate solution contains nitrogen atoms (as $NH_4^+$ ions) and phosphorus atoms (as $PO_4^{3-}$ ions) in a ratio of from 1:1 to 2:1, for example from 1.4:1 to 1.6:1.

7. A process according to any one of Claims 3 to 6, **characterised in that** said aqueous liquor additionally contains one or more carbamic acid derivatives having at least two amino-groups per molecule.

8. A process according to Claim 7, **characterised in that** the ratio of said carbamic acid derivatives to ammonium pyrophosphate is in the range 3:1 to 1:1 by weight, for example 1.5:1 to 2:1 by weight.

9. A process according to Claim 7 or 8 **characterised in that** said carbamic acid derivative is urea, guanidine or dicyandiamide.

10. A flame-retardant material comprising a flammable substrate, **characterised in that** said substrate has been treated with a composition according to Claim 1 or 2.

11. A material according to Claim 10, **characterised in that** said substrate comprises wood, a woody material (for example plywood, chipboard, fibre board or straw board), a fabric, paper, cardboard or wallpaper.